Europäisches Patentamt

(19) European Patent Office

Office européen des brevets

(11) Numéro de publication : **0 054 485 B1**

## (12) FASCICULE DE BREVET EUROPÉEN

(45) Date de publication du fascicule du brevet :
**07.11.84**

(21) Numéro de dépôt : **81401974.1**

(22) Date de dépôt : **10.12.81**

(51) Int. Cl.³ : **A 01 F 25/20**

(54) Dispositif pour le découpage de blocs de fourrage.

(30) Priorité : **11.12.80 FR 8026302**

(43) Date de publication de la demande :
**23.06.82 Bulletin 82/25**

(45) Mention de la délivrance du brevet :
**07.11.84 Bulletin 84/45**

(84) Etats contractants désignés :
**AT BE CH DE FR GB IT LI LU NL SE**

(56) Documents cités :
**EP-A- 0 041 445**
**GB-A- 1 518 595**

(73) Titulaire : **S.A. AUDUREAU Société dite:**
**La Copechagnière**
**F-85260 L'Herbergement (Vendée) (FR)**

(72) Inventeur : **Audureau, Bernard**
**Route de Nantes**
**F-85620 Rocheservière (Vendée) (FR)**

(74) Mandataire : **Ducas, Michel Louis Marie et al**
**Cabinet Boettcher 23, rue La Boétie**
**F-75008 Paris (FR)**

Jouve, 18, rue St-Denis, 75001 Paris, France

## Description

L'invention a pour objet un dispositif pour le découpage de blocs de fourrage, dans un tas ou un silo, comportant un bâti vertical porté ou portable à la base duquel est montée une fourche sensiblement horizontale à contour sensiblement rectangulaire et au voisinage du haut duquel est monté un bras télescopique porteur pivotant d'environ 180° autour d'un arbre vertical disposé en position médiane et dont l'extrémité libre du demi-bras extensible porteur porte un outil de coupe verticale guidé et orienté sur un trajet horizontal correspondant sensiblement au contour extérieur de la fourche sur ses trois côtés autres que son côté de montage sur le bâti, ledit dispositif comportant un moyen moteur d'entraînement en pivotement du bras porteur pivotant.

On a déjà proposé différents types d'appareils connus sous le nom de désileuse dont le but est de découper des parallélépipèdes de fourrage au moyen d'un couteau à lame verticale. Le fourrage, notamment celui qui résulte de l'ensilage en vert, est une matière compacte, fibreuse et résistante qui nécessite des puissances de coupe relativement importantes que les moteurs électriques ou hydrauliques habituellement utilisés ne peuvent pas toujours développer. On connaît par FR-A-2 187 242 un dispositif à bras porteur entraîné par une crémaillère et on connaît, par FR-A-2 255 008 un dispositif du type décrit au début, mais entraîné par un câble et dont l'outil de coupe est une bêche. Le câble avec ses poulies de renvoi présente de nombreux inconvénients, notamment le risque de rupture, l'encrassement des poulies. Même si on remplace la manivelle par un moteur on n'évite pas les inconvénients précités.

On connaît aussi par GB-A-1 518 595 un appareil de désilage comprenant un bâti vertical ayant à son extrémité inférieure une fourche horizontale dont les dents définissent un contour rectangulaire et à sa partie supérieure un bras horizontal télescopique porteur entraîné en rotation sur 180° par un vérin à double effet, ce bras télescopique ayant un demi-bras extensible minu à son extrémité libre d'un outil de coupe vertical guidé le long du contour rectangulaire de la denture de la fourche et orienté en position de coupe au moyen de deux galets engagés dans une rainure d'un moyen de guidage et d'orientation disposé horizontalement.

Dans ce brevet l'outil de coupe est articulé à l'extrémité du demi-bras extensible et deux biellettes servent à provoquer à la fois l'extension et l'orientation, à faible distance du fourrage ensilé. Il en résulte une certaine fragilité et une précision insuffisante de l'orientation.

Le but principal de l'invention est d'apporter un ensemble d'entraînement, de guidage et d'orientation d'un outil de coupe le long d'un contour rectangulaire arrondi qui possède l'avantage d'être plus robuste que les dispositifs connus et qui possède une meilleure précision de l'orientation de l'outil de coupe.

Ce but est atteint à partir d'un dispositif du type défini plus haut comprenant un moyen de guidage et d'orientation avec une rainure de guidage qui reçoit et guide un galet de guidage et un galet d'orientation, dans lequel selon l'invention cette rainure de guidage suit le tracé de la transformée polaire linéaire du contour par rapport à un pôle situé sur l'axe géométrique de l'arbre vertical qui porte le bras ; en outre, pour le guidage aussi, un second bras télescopique horizontal, décalé verticalement et angulairement par rapport audit bras télescopique porteur, s'étend entre l'arbre autour duquel il est libre en rotation et l'outil de coupe avec lequel il est articulé au moyen d'un axe d'articulation ; ce second bras télescopique comprend aussi un demi-bras extensible longitudinalement ; le galet de guidage est associé au bras télescopique porteur et le galet d'orientation est associé au second bras télescopique de guidage, ces galets étant montés respectivement sur le demi-bras extensible des deux bras télescopiques à une même distance des axes d'articulation respectifs de ces bras avec l'outil de coupe.

Les demi-bras extensibles pourvus des galets sont articulés par leur extrémité libre sur un support auquel est fixé l'outil de coupe.

Le bras télescopique porteur est entraîné en rotation par un vérin à double effet attelé par les extrémités opposées de son cylindre à une chaîne qui entoure une came fixée sur l'arbre qui porte ce bras, cette came étant arrondie sur son côté tourné vers les bras et ayant sur son côté opposé à ces derniers un profil reproduisant en réduction le profil de trois côtés du contour rectangulaire arrondi.

De cette façon, on dégage complètement le plan de coupe de tout organe autre que l'outil de coupe vertical porté à l'extrémité du demi-bras extensible. Pratiquement le profil géométrique de la came sera une transformée polaire linéaire, dont le pôle est sur l'axe de pivotement du bras, du tracé des trois côtés du rectangle constituant le trajet horizontal, correspondant sensiblement au contour extérieur de la fourche, à imposer à l'outil de coupe, ladite transformée étant obtenue par réduction radiale d'une longueur égale à l'écart entre ledit outil de coupe et le doigt ou galet porté par le demi-bras extensible. De cette façon, on obtient, par des moyens robustes, que l'outil de coupe suive le trajet fixé.

Grâce à l'invention, il existe un trapèze, quasi-rectangle, défini par les deux articulations du support articulé sur les extrémités libres des demi-bras et par les deux doigts ou galets guidés à force dans la rainure de la came à coulisse. Il en résulte que le plan de l'outil de coupe, qu'on prendra soin de fixer dans le plan du support articulé, suivra bien les lignes droites en façade et latérales du rectangle de découpage et prendra bien les deux virages d'angles avec, il est vrai, un léger adouci qui n'est pas gênant.

Le profil donné à la came qui est associé au vérin d'entraînement en pivotement du bras télescopique porteur pivotant agit comme un moyen de variation de la vitesse angulaire en fonction de la position angulaire du bras. De cette façon, on règle par construction la vitesse angulaire du bras pour la faire correspondre à une vitesse linéaire sensiblement constante de l'outil de coupe.

D'autres caractéristiques et avantages ressortiront de la description donnée ci-après, uniquement à titre d'exemple, d'un mode de réalisation de l'invention. On se reportera à cet effet aux dessins annexés, dans lesquels :

la figure 1 est une vue de dessus d'un dispositif conforme à l'invention,

la figure 2 est une vue en coupe médiane verticale du dispositif de la figure 1 selon II de la figure 1,

la figure 3 est une vue de détail en plan du bras télescopique porteur du dispositif des figures 1 et 2,

la figure 4 est une vue en coupe verticale longitudinale du même bras selon IV de la figure 3 représenté en position de guidage par la rainure de la came à coulisse,

la figure 5 est une vue analogue à la figure 4 du second bras télescopique de guidage.

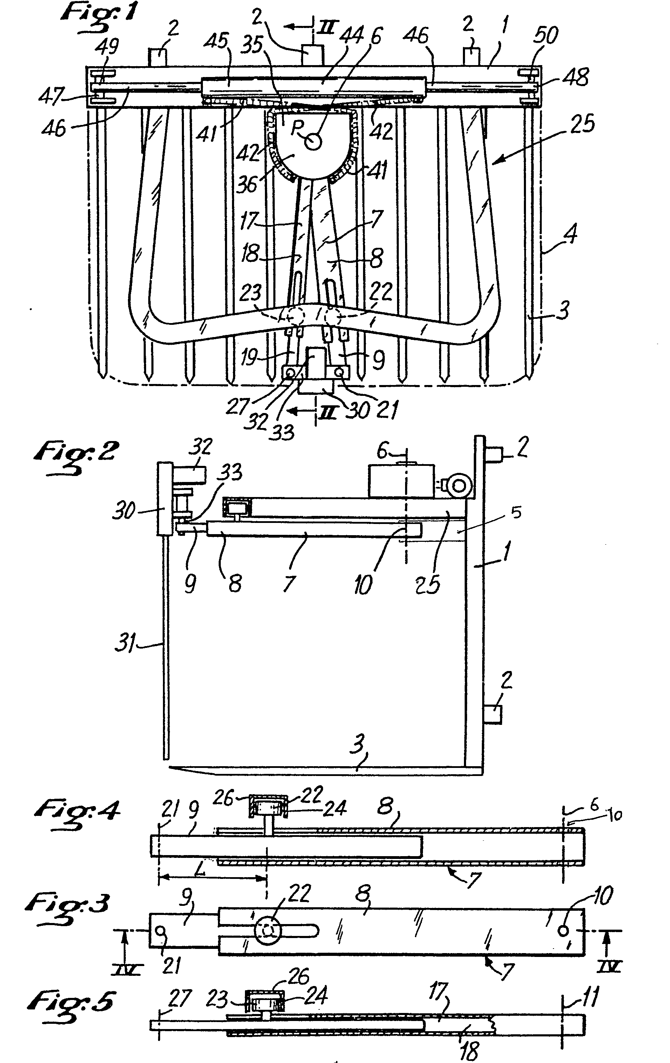

Un dispositif de l'invention comprend un bâti 1 comportant des attaches 2 permettant de le fixer verticalement sur l'attelage d'un tracteur ou sur un chariot élévateur, comme il est connu en soi. Le bâti 1 comporte à sa base une fourche horizontale sensiblement rectangulaire 3 dont le contour extérieur se projette verticalement selon la trace 4 représentée en trait interrompu. Sur la partie centrale supérieure du bâti 1 est monté un support 5 dirigé dans le sens des dents de la fourche 3 et portant en position médiane du bâti 1 un arbre vertical 6 pour un bras télescopique 7 comportant un demi-bras 8 pouvant être monté en 10 sur l'arbre 6 et un demi-bras extensible 9 par coulissement dans le demi-bras 8. Le demi-bras extensible 9 porte à son extrémité un outil de coupe constitué par un couteau 30 à lames vibrantes 31 verticales entraînées par un moteur 32 électrique ou hydraulique, dont les canalisations d'alimentation ne sont pas représentées pour la simplification du schéma et de l'exposé. Le bras télescopique porteur 7 peut pivoter d'environ 180° entre ses deux positions extrêmes l'amenant au voisinage du bâti 1, respectivement à droite et à gauche de la figure 1. Il est entraîné en mouvement d'une position extrême à l'autre comme il sera exposé plus loin.

On exposera d'abord comment le couteau 30 est guidé et orienté. A cet effet le dispositif comprend un second bras télescopique de guidage 17 décalé verticalement et angulairement par rapport au bras télescopique 7 et comportant un demi-bras 18 pouvant pivoter en 11 sur l'arbre 6 ou à son voisinage et un demi-bras extensible 19 par coulissement dans le demi-bras 18. Les extrémités libres des deux demi-bras extensibles 9 et 19 portent conjointement un support 33 pour le couteau 30. Ce support 33 est monté articulé en 21 à l'extrémité libre du demi-bras 9 et pareillement articulé en 27 à l'extrémité libre du demi-bras 19 par des articulations à axes verticaux. Les demi-bras extensibles 9 et 19 portent chacun au même niveau, en retrait du support 33 et à même distance, un galet, respectivement 22, 23, guidé dans la rainure 24 d'une came à coulisse 25 constituée par une cornière 26 en U renversé courbée dans le plan horizontal selon un profil géométrique sensiblement en ω à base arrondie dont les deux extrémités sont fixées en haut du bâti légèrement au-dessus du niveau des bras. Le tracé du profil en ω à base arrondie est la transformée polaire linéaire, à partir d'un pôle P situé sur l'axe de l'arbre 6, du tracé 4 correspondant sensiblement au contour extérieur de la fourche. Ladite transformée polaire linéaire est obtenue par réduction radiale à partir du pôle P du tracé 4 d'une longueur égale à la distance L entre les extrémités libres des demi-bras 9 et 19 portant le support 33 et respectivement les pivots des galets 22 et 23. On voit que, par la combinaison des bras télescopiques portant les galets sur leurs demi-bras extensibles, du support 33 qui peut servir à maintenir le décalage angulaire des deux bras, et de la came 25, on obtient en toute position angulaire du bras télescopique 7 porteur, à la fois le guidage et l'orientation du couteau grâce à un trapèze déformable constitué par les points d'articulation 21, 27 et les galets 22 et 23. De cette façon le couteau suit bien le tracé 4 prévu avec des arrondis 12 aux angles, et son orientation reste sensiblement celle du même tracé, à de légères imperfections près, de sorte que la ou les lames se déplacent toujours dans le plan de coupe idéal du tracé 4.

On décrira maintenant le mode d'entraînement en pivotement du bras télescopique porteur, c'est-à-dire d'entraînement du couteau guidé et orienté. Le bras 7 est monté calé sur l'arbre 6, mais non le bras 17. Sur ce même arbre 6 qui est monté pivotant librement est calée une came 35 constituée par un excentrique 36, dont le profil reproduit sensiblement, à petite échelle sur son côté opposé aux bras 7, 17, le profil du tracé 4 tandis qu'il présente sur son côté tourné vers les bras 7 et 17 un arrondi de raccordement. Du côté des bras est attachée contre l'excentrique 36 une première chaîne 41 qui s'enroule, dans le sens inverse des aiguilles d'une montre sur la figure 1, autour de celui-ci pour venir s'attacher à son autre extrémité à l'extrémité gauche d'un fût 44 de vérin 45 monté comme il sera exposé plus loin. Symétriquement, une deuxième chaîne 42 est attachée contre l'excentrique 36 du côté des bras 7 et 17 et elle s'enroule, dans le sens des aiguilles d'une montre sur la figure 1, pour venir s'attacher à son autre extrémité à l'extrémité droite du fût 44 de vérin 45. Les chaînes 41 et 42, se croisant à l'arrière de l'excentrique 36, sont fixées sur celui-ci à deux niveaux différents. Le vérin 45, qui est l'organe moteur de l'ensemble, est un vérin à double effet et comporte une tige traversante 46, dont les deux extrémités 47 et 48 sont fixées par articulations horizontales en T 49 et 50 aux deux extrémités du bâti au niveau de l'excentrique 36.

De cette façon à chaque unité de déplacement du vérin correspondra un déplacement angulaire variable en fonction de l'élongation actuelle en vue d'obtenir un déplacement du couteau à vitesse linéaire sensiblement constante et donc une utilisation optimale de ses qualités de coupe sans bourrage.

## Revendications

1. Dispositif pour le découpage de blocs de fourrage dans un tas, comprenant un bâti (1) vertical en position d'utilisation, à la partie inférieure duquel est fixée une fourche horizontale (3) dont les dents définissent un contour rectangulaire (4) à angles arrondis et à la partie supérieure duquel pivote dans un plan horizontal sur environ 180° un bras télescopique porteur (7) calé par une extrémité sur un arbre vertical (6), lui-même disposé en position médiane sur le bâti (1) et entraîné en rotation partielle par un organe moteur (44) lié au bâti de façon à agir sur un moyen d'entraînement (35) calé sur ledit arbre (6), l'extrémité libre d'un demi-bras extensible (8) faisant partie du bras télescopique porteur (7) portant un outil de coupe (30) vertical avec son moyen d'entraînement (32), cet outil de coupe (30) étant guidé et orienté sur un trajet horizontal correspondant au contour (4) de la fourche sur ses trois côtés, autres que le côté de montage de la fourche (3) sur le bâti (1), par un moyen de guidage et d'orientation (25) fixé au bâti (1) dans un plan horizontal et comportant une rainure de guidage (24) dans laquelle roulent un galet de guidage (22) et un galet d'orientation (23) associés à l'outil de coupe (30), caractérisé en ce que la rainure (24) de guidage du moyen de guidage et d'orientation (25) suit le tracé de la transformée polaire linéaire du contour (4) par rapport à un pôle (P) situé sur l'axe géométrique de l'arbre vertical (6), et en ce que, pour le guidage aussi, un second bras télescopique (17) disposé aussi horizontalement mais décalé angulairement et verticalement par rapport au bras télescopique porteur (7) s'étend entre l'arbre (6) autour duquel il est monté libre en rotation et l'outil de coupe (30) avec lequel il est articulé au moyen d'un axe d'articulation (27), le galet de guidage (22) étant associé au bras télescopique porteur (7) et le galet d'orientation (23) étant associé au second bras télescopique de guidage (17) et ces galets (22, 23) étant montés respectivement sur le demi-bras (9, 19) extensible de ces deux bras télescopiques (7, 17) à une même distance des axes d'articulation (21, 27) respectifs de ces bras avec l'outil de coupe (30).

2. Dispositif selon la revendication 1 dans lequel le moteur d'entraînement en rotation de l'arbre vertical comprend un vérin à double effet (45) relié par des chaînes (41, 42) à une came fixe (35) calée en rotation sur l'arbre vertical et arrondie du côté des bras, caractérisé en ce que cette came (35) a, sur son côté opposé aux bras (7, 17), un profil en réduction desdits trois côtés du contour (4).

## Claims

1. A device for cutting off blocks of fodder from a heap, comprising a frame (1) which is vertical in the position of use and to the bottom portion of which is attached a horizontal fork (3) the teeth of which define a rectangular contour (4) with rounded corners and at the top portion of which in a horizontal plane a telescopic bearer arm (7) pivots through about 180°, being keyed by one end onto a vertical shaft (6) which in turn is arranged in a central position on the frame (1) and driven in partial rotation by a driving member (44) connected to the frame so as to act upon a driving means (35) keyed onto the said shaft (6), the free end of an extensible half-arm (8) forming part of the telescopic bearer arm (7) carrying a vertical cutting tool (30) with its driving means (32), this cutting tool (30) being guided and directed along a horizontal path corresponding with the contour (4) of the fork along the three sides of it other than the side at which the fork (3) is mounted on the frame (1), by a means of guidance and direction (25) attached to the frame (1) in an horizontal plane and including a guide groove (24) in which run a guide roller (22) and a director roller (23) which are associated with the cutting tool (30), characterized in that the guide groove (24) of the means of guidance and direction (25) follows the outline of the polar linear transformed curve of the contour (4) with respect to a pole (P) situated on the geometric axis of the vertical shaft (6), and in that also for the guidance a second telescopic arm (17) arranged also horizontally but offset angularly and vertically with respect to the telescopic bearer arm (7) extends between the shaft (6) round which it is mounted to be able to rotate freely and the cutting tool (30) to which it is hinged by means of a hingepin (27), the guide roller (22) being associated with the telescopic bearer arm (7) and the director roller (23) being associated with the second telescopic guide arm (17) and these rollers (22, 23) being mounted respectively on the extensible half-arms (9, 19) of these two telescopic arms (7, 17) at equal distances from the respective hingepins (21, 27) between these arms and the cutting tool (30).

2. A device as in Claim 1 in which the motor for driving the vertical shaft in rotation comprises a double-acting jack (45) connected by chains (41, 42) to a fixed cam (35) keyed against rotation onto the vertical shaft and rounded next to the arms, characterized in that this cam (35) has at the side of it opposite from the arms (7, 17) a profile on a reduced scale of the said three sides of the contour (4).

## Ansprüche

1. Vorrichtung zum Ausschneiden von Gärfutterblocks in einem Haufen, umfassend einen in Gebrauchslage vertikalen Rahmen, wobei an dem unteren Teil desselben eine horizontale Gabel (3), befestigt ist, deren Zinken eine rechteckige Kontur (4) mit abgerundeten Ecken definieren, und an dessen oberen Teil ein teleskopierbarer Tragarm (7) in einer Horizontalebene um etwa 180° verschwenkbar ist, der über ein Ende auf einer vertikalen Welle (6) festgekeilt ist, die ihrerseits in einer mittleren Lage auf dem Rahmen (1) angeordnet ist und durch ein Antriebsorgan (44) zur Teildrehung angetrieben ist, das mit dem Rahmen verbunden ist, um auf einem Mitnehmer (35) einzuwirken, der auf der genannten Welle (6) festgekeilt ist, wobei das freie Ende eines ausziehbaren Halbarmes (8), der Teil des teleskopierbaren Tragarmes (7) ist, ein vertikales Schneidwerkezug (30) mit seinem Antrieb (32) trägt, wobei dieses Schneidwerkzeug (30) längs eines horizontalen Weges, welcher der Kontur (4) der Gabel auf ihren drei Seiten, mit Ausnahme der Seite der Befestigung der Gabel (3) am Rahmen (1) entspricht, durch eine Einrichtung zur Führung und Ausrichtung (25) geführt und ausgerichtet ist, die am Rahmen (1) in einer horizontalen Ebene befestigt ist und eine Führungsnut (24) aufweist, in welcher eine Führungsrolle (22) und eine Ausrichtrolle (23) abrollen, die den Schneidwerkzeug (30) zugeordnet sind, dadurch gekennzeichnet, daß die Führungsnut (24) der Führungs- und Ausrichteeinrichtung (25) der Linie der linearen Polartransformierten der Kontur (4), bezogen auf einen Pol (P), der auf der geometrischen Achse der vertikalen Welle (6) liegt, folgt und daß sich auch zur Führung ein zweiter teleskopierbarer Arm (17), der ebenfalls horizontal angeordnet, jedoch winkelmäßig und in Höhenrichtung gegenüber dem teleskopierbaren Tragarm (7) versetzt ist, zwischen der Welle (6), um welche er frei drehbar angeordnet ist, und dem Schneidwerkzeug (30) ersteckt, mit dem er gelenkig mit Hilfe einer Gelenkachse (27) verbunden ist, wobei die Führungsrolle (22) dem teleskopierbaren Tragarm (7) zugeordnet ist und die Ausrichterolle (23) dem zweiten teleskopierbaren Führungsarm (17) zugeordnet ist und wobei diese Rollen (22, 23) jeweils auf den ausziehbaren Halbarmen (9, 19) dieser beiden teleskopierbaren Arme (7, 17) mit einem gleichen Abstand der jeweiligen Gelenkachsen (21, 27) dieser Arme von Schneidwerkzeug (30) angeordnet sind.

2. Vorrichtung nach Anspruch 1, worin der Drehantriebsmotor der vertikalen Welle einen doppeltwirkenden Zylinder (45) umfaßt, der durch Ketten (41, 42) mit einer fixen Nocke (35), die auf die vertikale Welle drehfest aufgekeilt ist und auf der Seite der Arme abgerundet ist, dadurch gekennzeichnet, daß diese Nocke (35) auf ihrer den Armen (7, 17) gegenüberliegenden Seite ein verkleinertes Profil der drei genannten Seiten der Kontur (4) hat.

0 054 485

Fig.1

Fig.2

Fig.4

Fig.3

Fig.5